# EUROPEAN PATENT APPLICATION

(11) **EP 2 429 162 A1**
(43) Date of publication of application: **14.03.2012**
(21) Application number: 10819876.3
(22) Date of filing: 19.09.2010
(51) Int. Cl.: H04M 3/51

(54) **SEAT SERVICE PROCESSING METHOD AND IP SEAT TERMINAL**

(30) Priority: 30.09.2009 CN 200910235620
(71) Applicant: Huawei Technologies Co., Ltd., Guangdong 518129 (CN)
(72) Inventor: LV, Yinfu, Shenzhen Guangdong 518129 (CN); PAN, Jianying, Shenzhen Guangdong 518129 (CN); PAN, Jian, Shenzhen Guangdong 518129 (CN); ZHANG, Tao, Shenzhen Guangdong 518129 (CN); LIN, Lin, Shenzhen Guangdong 518129 (CN)
(74) Representative: Thun, Clemens
(86) International application number: PCT/CN2010/077100
(87) International publication number: WO 2011/038647

(57) **Abstract**

An agent service processing method and an Internet Protocol (IP) agent terminal are provided. The method includes the following steps: receiving, by an IP agent terminal, a user side media stream sent by a user terminal through an IP network; performing audio and video processing on the user side media stream according to a control command from a computer used by an agent; sending the processed user side media stream to an external device used by the agent, and/or sending the processed user side media stream to the computer used by the agent through a computer peripheral interface of the computer used by the agent. By using the agent service processing method and the IP agent terminal, conversation quality of an agent service is ensured, while service flexibility is considered.

## Description

This application claims priority to Chinese Patent Application No. 200910235620.2, filed with the Chinese Patent Office on September 30, 2009, and entitled "AGENT SERVICE PROCESSING METHOD AND INTERNET PROTOCOL AGENT TERMINAL", which is incorporated herein by reference in its entirety.

### FIELD OF THE INVENTION

The present invention relates to an agent service processing method and an Internet Protocol (IP) agent terminal capable of implementing the method.

### BACKGROUND OF THE INVENTION

With the development and construction of network technologies, agents in a call center start to use IP agent terminals based on IP interface and IP protocol. The existing IP agent terminals mainly are categorized into soft IP agent terminals and hard IP agent terminals.

The existing soft IP agent terminal is software installed on a computer used by the agent. The existing soft IP agent terminal needs to occupy system resources of the computer, so as to result in great conversation delay, thereby affecting conversation quality and leading to poor reliability.

The existing hard IP agent terminal is a hardware device which has a shape similar to a conventional phone, but is capable of being directly connected to the IP interface through a network cable. In addition, the hard IP agent terminal having a capability of supporting video is also disposed with a camera and a display screen. The existing hard IP agent terminal is entirely independent of the computer used by the agent physically, thereby failing to cooperate with agent services flexibly.

### SUMMARY OF THE INVENTION

The present invention provides an agent service processing method and an IP agent terminal, capable of ensuring conversation quality of an agent service while considering service flexibility.

An embodiment of the present invention provides an agent service processing method, where the method includes:
receiving, by an IP agent terminal, a user side media stream sent by a user terminal through an IP network; and
performing an audio and video processing on the user side media stream according to a control command from a computer used by an agent, sending a processed user side media stream to an external device used by the agent, and/or sending the processed user side media stream to the computer used by the agent through a computer peripheral interface of the computer used by the agent.

Another embodiment of the present invention provides an IP agent terminal, where the terminal includes an external IP interface, an audio and video media processing module, an agent side media interface, and a computer peripheral interface adaptation module;
the external IP interface is connected to an IP network and is configured to receive a user side media stream sent by a user terminal through the IP network;
the computer peripheral interface adaptation module is connected to a computer peripheral interface of a computer used by an agent in an adaptive manner and is configured to send a control command according to the received user side media stream sent by the user terminal; and send a user side media stream processed by the audio and video media processing module to the computer used by the agent through the computer peripheral interface of the computer used by the agent;
the audio and video media processing module is connected to the external IP interface, the agent side media interface and the computer peripheral interface adaptation module and is configured to perform audio and video processing on the user side media stream from the external IP interface according to the control command sent by the computer peripheral interface adaptation module, and send the processed user side media stream to the agent side media interface and/or the computer peripheral interface adaptation module; and
the agent side media interface is configured to send the processed user side media stream processed by the audio and video media processing module to an external device used by the agent.

Through the agent service processing method and the IP agent terminal according to the embodiments of the present invention, an entire conversation process between the agent and the user is implemented through hardware independently, and is independent of the computers used by agents, thereby ensuring the conversation quality of the agent service; moreover, since the IP agent terminal is connected to the peripheral interface of the computer used by the agent in an adaptive manner through the computer peripheral interface adaptation module, the service flexibility is improved by combining computer applications.

The technical solutions of the present invention are described in detail through accompanying drawings and embodiments.

### BRIEF DESCRIPTION OF THE DRAWINGS

FIG. 1 is a schematic structure diagram of an IP agent terminal according to an embodiment of the present invention;
FIG. 2 is a schematic structure diagram of an IP agent terminal according to another embodiment of the present invention;
FIG. 3 is a flow chart of an agent service processing method according to an embodiment of the present invention;
FIG. 4 is a flow chart of an agent service processing method according to another embodiment of the present invention;
FIG. 5 is a flow chart of an agent service processing method according to further another embodiment of the present invention;
FIG. 6 is a flow chart of an agent service processing method according to further another embodiment of the present invention;
FIG. 7 is a flow chart of an agent service processing method according to further another embodiment of the present invention;
FIG. 8 is a flow chart of an agent service processing method according to further another embodiment of the present invention; and
FIG. 9 is a flow chart of an agent service processing method according to further another embodiment of the present invention.

### DETAILED DESCRIPTION OF THE EMBODIMENTS

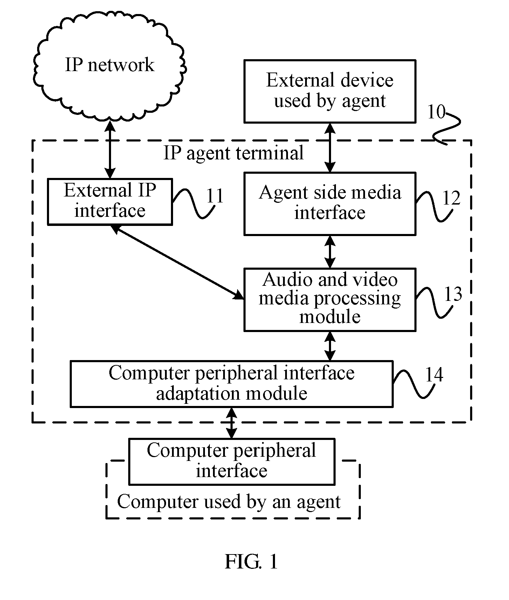

FIG. 1 shows an IP agent terminal according to an embodiment of the present invention. As shown in FIG. 1, the IP agent terminal 10 includes an external IP interface 11, an agent side media interface 12, an audio and video media processing module 13 and a computer peripheral interface adaptation module 14. The external IP interface 11 is connected to an IP network, so as to exchange data information with a user terminal through the IP network. The computer peripheral interface adaptation module 14 is connected to a computer peripheral interface of a computer used by an agent in an adaptive manner. The audio and video media processing module 13 is connected to the external IP interface 11, the agent side media interface 12 and the computer peripheral interface adaptation module 14. Operating principles of the IP agent terminal are described as follows.

The external IP interface 11 receives a user side media stream sent by the user terminal (not shown) through the IP network and sends the user side media stream to the audio and video media processing module 13. The user side media stream may include a user side audio media stream and a user side video media stream. The computer peripheral interface adaptation module 14 sends a control command according to the user side media stream sent by the user terminal and received by the external IP interface 11. The audio and video media processing module 13 performs audio and video processing on the user side media stream from the external IP interface 11 according to the control command sent by the computer peripheral interface adaptation module 14, and sends the processed user side media stream to the agent side media interface 12 and/or the computer peripheral interface adaptation module 14.

The agent side media interface 12 sends the user side media stream processed by the audio and video media processing module 13 to an external device used by the agent. Specifically, the agent side media interface 12 may be an earphone interface, configured to exchange audio streams with the agent through an external earphone; or a Universal Serial Bus (USB) interface, configured to display a video stream to be played to the agent through an external display screen or implement exchange of video between the agent and a user of the user terminal through an external camera.

It should be noted that during the exchange of video, the external camera may not be connected to the IP agent terminal 10 of the embodiment, but is directly connected to the USB interface of the computer used by the agent, and receives the video stream of the agent through the computer peripheral interface adaptation module 14 in the IP agent terminal 10; moreover, the video stream to be played to the agent may be sent to the computer used by the agent through the computer peripheral interface adaptation module 14, and displayed by the display screen of the computer. The computer peripheral interface adaptation module 14 will be described in detail below. Similarly, during exchange of audio, the external earphone may not be connected to the IP agent terminal 10 of the embodiment, but is directly connected to the external device interface (such as the earphone interface) of the computer used by the agent, thereby exchanging audio with the agent through the computer peripheral interface adaptation module 14.

The computer peripheral interface adaptation module 14 sends the user side media stream processed by the audio and video media processing module 13 to the computer used by the agent through the computer peripheral interface of the computer used by the agent, so as to shield changes caused due to different computer peripheral interfaces. Afterwards, the video stream may be played through the display device of the computer directly, or the audio streams may be exchanged with the agent through the external earphone connected to the earphone interface disposed on the computer, or the video stream to be played to the agent is displayed through the external display screen connected to the USB interface disposed on the computer.

The process that the IP agent terminal 10 receives the user side media stream from the IP network and sends the user side media stream to the external device and/or the computer used by the agent is described above. A process that the IP agent terminal 10 sends an agent side media stream and a computer side media stream to the user terminal in the IP network is described below.

The agent side media interface 12 receives an agent side media stream from the external device used by the agent. Specifically, the agent side media interface may be a USB interface, configured to obtain a video stream of the agent through an external camera and use the video stream as the agent side media stream, or may be an earphone interface, configured to obtain an audio stream of the agent through the external earphone and use the audio stream as the agent side media stream. The computer peripheral interface adaptation module 14 sends a control command according to the agent side media stream. The audio and video media processing module 13 may be further configured to receive an agent side media stream (which may include an audio stream and a video stream) sent by the agent side media interface 12, perform audio and video processing (for example, synchronizing and packing) on the agent side media stream according to the control command, and send the processed agent side media stream to the external IP interface 11. The external IP interface 11 sends the processed agent side media stream to the user terminal through the IP network. The specific processing process includes synchronizing and packing the agent side audio media stream. The specific packing process may be packing, unpacking and buffering according to a Real-time Transport Protocol (RTP) standard to form consecutive video data. For example, the processing may be operations such as displaying images only while not playing voices, duplicating the audio stream of the user and recording the audio stream on the computer, and displaying agent video information on a certain background picture. The computer peripheral interface adaptation module 14 receives a computer side media stream from the computer used by the agent through the computer peripheral interface of the computer used by the agent, and sends a control command according to the received computer side media stream. Specifically, the computer peripheral interface adaptation module 14 may obtain a video stream of the agent through an external camera connected to the USB interface disposed on the computer and use the video stream as the computer side media stream, or obtain an audio stream of the agent through the external earphone connected to the earphone interface disposed on the computer and use the audio stream as the computer side media stream. The audio and video media processing module 13 may be further configured to receive the computer side media stream (which may include an audio stream and a video stream) sent by the computer used by the agent through the computer peripheral interface adaptation module 14, perform audio and video processing on the computer side media stream according to the control command, and send the processed computer side media stream to the external IP interface 11. The external IP interface 11 sends the processed computer side media stream to the user terminal through the IP network. The specific processing process includes synchronizing and packing the computer side video media stream. The specific packing process may be packing, unpacking and buffering according to the RTP standard to form consecutive video data. For example, the processing may be operations such as displaying images only while not playing voices, duplicating the audio stream of the user and recording the audio stream on the computer, and displaying agent video information on a certain background picture.

Furthermore, the audio and video media processing module 13 may be further configured to receive the audio media stream from the agent side sent by the agent side media interface 12 and receive the video media stream from the computer side sent by the computer used by the agent through the computer peripheral interface adaptation module 14, and send the received media streams to the user terminal through the external IP interface 11 after processing (such as synchronizing and packing) the media streams.

Specifically, an implementation method for receiving the agent side media stream may be receiving the media stream from the agent side through the agent side media interface 12 and the external device connected to the agent side media interface 12 (in a wired and wireless manner) such as the earphone and the camera. Specifically, an implementation method for receiving the computer side media stream may be receiving the media stream from the computer side through the computer peripheral interface adaptation module 14 and the peripheral interface of the computer used by the agent connected to the computer peripheral interface adaptation module 14, for example, the USB interface and the camera interface.

The processes that the IP agent terminal 10 sends the agent side media stream and the computer side media stream separately to the user terminal in the IP network are described above. A process of sending the agent side media stream and the computer side media stream simultaneously is described below.

The agent side media interface 12 receives an agent side media stream from the external device used by the agent. The computer peripheral interface adaptation module 14 receives a computer side media stream from the computer used by the agent through the computer peripheral interface of the computer used by the agent, and sends a control command according to the computer side media stream and the agent side media stream. The audio and video media processing module 13 performs audio and video processing on the agent side media stream and the computer side media stream according to the control command, and sends the processed agent side media stream and computer side media stream to the external IP interface 11. The external IP interface 11 sends the processed agent side media stream and the processed computer side media stream to the user terminal through the IP network.

Specifically, the audio and video processing may be performed under indication of a media control command from a computer side control command module 1402, where the computer side control command module 1402 is described in detail in the following embodiment.

Specifically, the preceding external IP interface 11 may be a Fast Ethernet (FE) interface or a Gigabit Ethernet (GE) interface, so as to implement access using one cable. In addition to the wired connection manner, the external IP interface 11 may also be a wireless interface connecting external devices in a wireless manner through technologies such as a Wireless Fidelity (WiFi) technology or Third Generation (3G) wireless internet access.

External information exchanged between the external IP interface 11 and the IP network includes call control signaling, service data (such as user information, user call cost and service information obtained after querying a database through the network, for providing services for the user) and audio and video media streams. Since the external exchange and the conversation process of the agent service use uniform network interfaces, no extra IP network interface needs to be provided for connection, thereby reducing costs and networking complexity.

The computer peripheral interface may specifically be any type of computer peripheral interfaces such as a USB interface, an External Serial Advanced Technology Attachment (eSAT) interface, a Peripheral Component Interconnect (PCI) interface, or a PCI-Express (PCI-E) interface. After a corresponding driver is installed on the computer, the computer is capable of exchanging call control signaling and media streams with the IP agent terminal 10 through the computer peripheral interface. The IP agent terminal 10 of the preceding embodiment ensures the conversation quality of the agent service while considering the service flexibility. Specifically, compared with the existing soft IP agent terminal, the IP agent terminal 10 of the preceding embodiment has the technical effects embodied in the following aspects.

In one aspect, the reliability of the agent system is improved. The IP agent terminal 10 of each preceding embodiment implements the agent service processing through hardware. The entire conversation process between the agent and user is independent of the computer used by the agent. Therefore, even if the computer system fails to work normally, the normal continuity of the conversation is ensured, thereby improving the reliability.

In another aspect, the IP agent terminal brings a low time delay effect. The existing soft IP agent terminal needs to occupy hardware resources such as a network card, a sound card and a camera of the computer used by the agent, so as to provide conversation capabilities such as audio and video. In addition, when processing audio and video streams, the soft IP agent terminal needs to transport the audio and video streams received on the network card of the computer to the sound card through a Central Processing Unit (CPU) and an internal bus system of the computer, and the sound card generates the voice, thereby generating a delay of 100 milliseconds to 200 milliseconds. During about 20 times of conversation with the user, the duration of the entire conversation process is added by 3 seconds to 5 seconds. If on average, each agent spends 60 seconds to answer a call, the time delay makes the processing capability of the agent call center decline by about 8%. Moreover, in abnormal cases, for example, the computer is handling with some high-load processing tasks such as copying large files and accessing large data volumes in a database, the conversation quality and the time delay achieved through software cannot be ensured at all. In contrast, the IP agent terminal 10 according to the embodiment is capable of performing part of operations such as call control, service data transmission and exchange of media streams, thereby reducing a participation degree of the computer system used by the agent, making the time delay become very small and entirely satisfying the requirement for the conversation quality.

In addition, compared with the existing hard IP agent terminal, the IP agent terminal 10 has the technical effects embodied in the following aspects.

In one aspect, a usage ratio of hardware resources is improved. The IP agent terminal 10 according to the embodiment is connected to the peripheral interface of the computer used by the agent in an adaptive manner through the computer peripheral interface adaptation module 14, and therefore, during operations such as the call control, service data transmission and exchange of media streams, the IP agent terminal 10 may share the hardware resources with the computer. For example, network cables connected to the IP agent terminal 10 may be shared, or a power supply is provided through the computer peripheral interface, and a power line of the computer is shared. Therefore, no independent arrangement of wire is required, and the power of the IP agent terminal 10 does not need to be supplied from an expensive switch with a Power over Ethernet (PoE) function through the network cable, thereby reducing the complexity and the running cost during engineering implementation.

In another aspect, the flexibility of the agent services is improved. When a video service is carried out in the agent call center, the user does not view the agent in most cases, but views service data (such as user information and charging information) queried from the computer used by the agent. The existing hard IP agent terminal cannot flexibly exchange the media streams with the computer used by the agent, thereby failing to play the service data to the user through a video mode. In contrast, the IP agent terminal 10 according to the embodiment is connected to the peripheral interface of the computer used by the agent through the computer peripheral interface adaptation module 14 in an adaptive manner and implements the exchange of the media stream, so as to play the relevant video on the computer to the user, thereby improving the flexibility of the agent service.

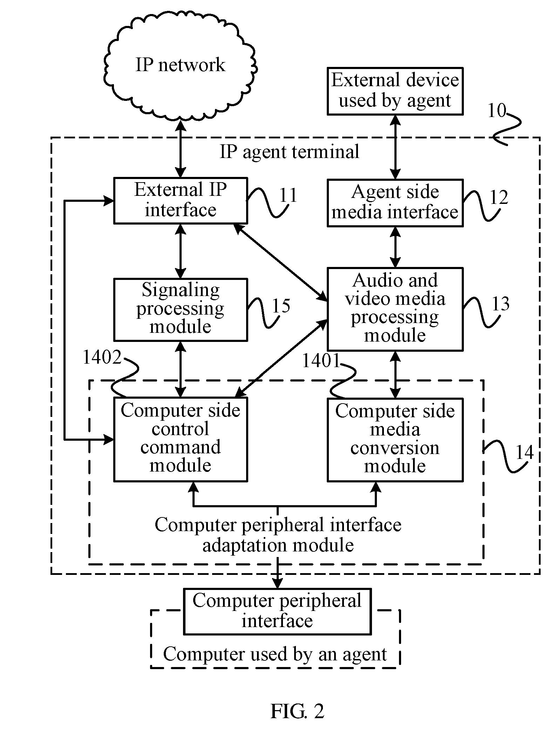

FIG. 2 shows an IP agent terminal 10 according to another embodiment of the present invention. As shown in FIG. 2, compared with the IP agent terminal shown in FIG. 1, the IP agent terminal 10 further includes the following modules.

The IP agent terminal 10 further includes a signaling processing module 15, configured to execute a corresponding call control process according to call control signaling from the external IP interface 11 and/or the computer peripheral interface adaptation module 14. A specific example may include the following steps: the external IP interface 11 receives a call establishment request (Invite) from the IP network; the signaling processing module 15 sends a ring indication to the external device used by the agent through the agent side media interface 12 according to the call establishment request; the external device used by the agent sends ring information (180 Ringing) to the signaling processing module 15 according to the ring indication; the signaling processing module 15 sends the ring information to the user terminal through the external IP interface 11; when the signaling processing module 15 detects that the external device used by the agent is off-hook, the signaling processing module 15 sends a reply for a successful connection (200 OK) to the user terminal through the external IP interface 11; when the signaling processing module 15 receives an acknowledgement message (ACK) from the user terminal through the external IP interface 11, the signaling processing module 15 establishes a communication connection between the user terminal and the external device.

In another specific embodiment, the signaling processing module 15 may further perform the following steps: when the signaling processing module 15 detects that the external device is on-hook, the signaling processing module 15 sends a hang-up message (Bye) to the user terminal through the external IP interface 11; when the signaling processing module 15 receives a hang-up reply message from the user terminal, the signaling processing module 15 removes the communication connection.

In another specific embodiment, the signaling processing module 15 is further configured to send a registration request (Register) to a registration server in the IP network through the external IP interface 11, and receive a registration success reply message (200 OK) returned by the registration server through the external IP interface 11 after the registration server verifies the IP agent terminal 10 and the verification is passed.

In another specific embodiment, the process may be: the agent sends a switch registration command carrying a new registration address to the computer peripheral interface adaptation module 14 through the computer used by the agent and the computer peripheral interface of the computer; the computer side control command module 1402 in the computer peripheral interface adaptation module 14 sends the switch registration command to the signaling processing module 15; the signaling processing module 15 sends the switch registration command to the registration server through the external IP interface 11; the signaling processing module 15 receives a registration success reply message returned by the registration server through the external IP interface 11 after the registration server verifies the IP agent terminal 10 according to the new registration address and the verification is passed, and the signaling processing module 15 performs registration switch.

Switch registration means to register again. In the prior art, in order to implement the switch registration function, a one-key automatic switch registration button generally needs to be added to the IP agent terminal. When a fault occurs in a queuing machine of an agent call center, the IP agent terminal may automatically register with a queuing machine of another agent call center. However, such implementation mode of the switch registration requires re-designing and re-manufacturing of the existing IP agent terminal, which takes a long time, costs a lot of money and requires much modification. While through the IP agent terminal according to the embodiment of the present invention, the switch registration process may be accomplished through a software mode, without adding buttons to physical devices, thereby avoiding the inconvenience of re-designing and re-manufacturing.

The computer peripheral interface adaptation module 14 is further disposed with a computer side media conversion module 1401, configured to perform format conversion on the computer side media stream and/or user side media stream exchanged between the computer peripheral interface adaptation module 14 and the audio and video media processing module 13. For example, each media stream sent by the computer used by the agent is converted to a format capable of being processed in the audio and video media processing module 13, and the media stream sent from the audio and video media processing module 13 to the computer is converted to a media format capable of being connected at the computer side.

The computer peripheral interface adaptation module 14 may further include the computer side control command module 1402, configured to receive information from the computer used by the agent or the external IP interface, and judge a type of the information by parsing the information. Specifically, the information has a specific predefined structure, and the type of the information may be known by parsing the information according to the predefined structure. After the type of the information is determined, the following corresponding control command is sent.

When the information is a call control command (such as the switch registration command sent during the switch registration process) from the computer, the call control command is sent to the signaling processing module 15, so as to perform corresponding call control.

Alternatively, when the information is a media control command from the computer, the media control command is sent to the audio and video media processing module 13, so as to perform media control on media streams (including the user side media stream, the agent side media stream and the computer side media stream).

Alternatively, when the information is service data from the computer or the external IP interface, the service data is forwarded between the computer peripheral interface adaptation module and the external IP interface. Specifically, the service data may be forwarded in manners such as direct transparent transmission. A specific service data exchange process is described as follows.

The computer side control command module 1402 receives a service data query request sent by the computer according to an instruction of the agent.

The computer side control command module 1402 sends the service data query request to a network query server in the IP network through the external IP interface 11.

The computer side control command module 1402 receives service data found by the network query server in a service database in the IP network through the external IP interface 11.

The computer side control command module 1402 sends the service data to the computer.

In addition to the technical effects in the preceding embodiments, compared with the existing hard IP agent terminal, the IP agent terminal 10 according to the embodiment has an advantage of being capable of extending and supporting new functions. With the development of the agent services, new functions need to be added to the existing hard IP agent terminal continuously, so as to improve user experience and system reliability. The IP agent terminal 10 according to the embodiment is connected to the peripheral interface of the computer used by the agent in an adaptive manner through the computer peripheral interface adaptation module 14, and exchanges the service data, the call control command and the media control command. Therefore, the new functions may be easily extended and supported by changing the control command or the relevant hardware driver.

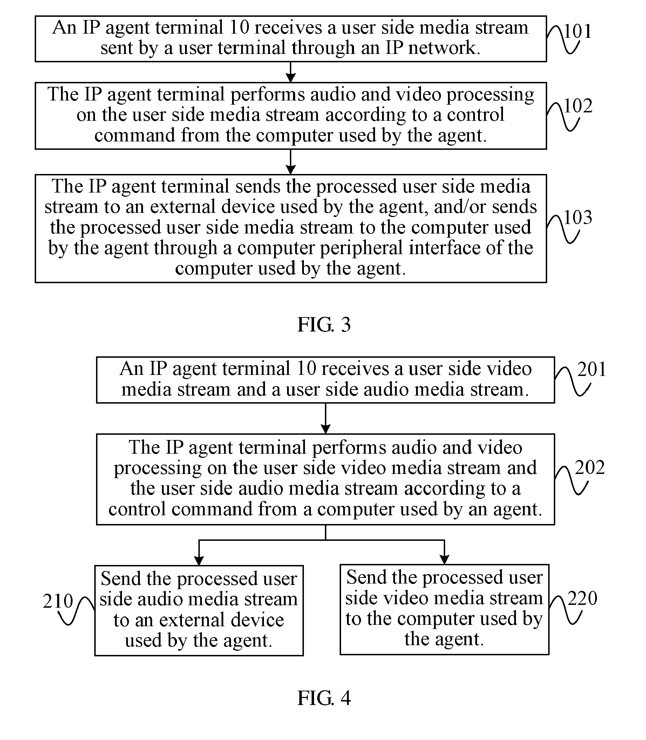

FIG. 3 shows a flow chart of an agent service processing method based on the IP agent terminal 10 according to an embodiment of the present invention, where the method includes the following steps.

Step 101: An IP agent terminal 10 receives a user side media stream sent by a user terminal through an IP network.

Specifically, the user side media stream may be received through an external IP interface 11 of the IP agent terminal 10. The user side media stream may be a user side video media stream or a user side audio media stream. Specifically, the user side media stream from the IP network may enter the IP agent terminal 10 through the external IP interface 11 in a wireless connection manner or a wired connection manner.

Step 102: The IP agent terminal performs audio and video processing on the user side media stream according to a control command from the computer used by the agent.

Step 103: The IP agent terminal sends the processed user side media stream to an external device used by the agent, and/or sends the processed user side media stream to the computer used by the agent through a computer peripheral interface of the computer used by the agent.

Specifically, the processed user side audio and video media streams may be sent to the external device used by the agent. Alternatively, the processed user side audio media stream and the processed user side video media stream may be sent to the computer used by the agent.

In addition, before the media stream is sent to the computer and/or the external device used by the agent, format conversion may be performed on the media stream through a computer side media conversion module 1401, so that the media stream may be played on the computer and/or the external device.

The agent service processing method of the embodiment is implemented based on the IP agent terminal 10 of the preceding embodiments, thereby possessing an advantage of ensuring conversation quality of the agent service while considering service flexibility. For analysis of specific technical effects, reference may be made to the preceding descriptions, and details will not be described herein again.

FIG. 4 shows a flow chart of an agent service processing method based on the IP agent terminal 10 according to another embodiment of the present invention, where the method includes the following steps.

Step 201: An IP agent terminal 10 receives a user side video media stream and a user side audio media stream.

Step 202: The IP agent terminal performs audio and video processing on the user side video media stream and the user side audio media stream according to a control command from a computer used by an agent.

Step 210: Send the processed user side audio media stream to an external device used by the agent.

Specifically, the user side audio media stream may be sent to the external device used by the agent through the agent side media interface 12. The external device may be an external earphone. The user side audio media stream is played to the agent through the external earphone.

Step 220: Send the processed user side video media stream to the computer used by the agent.

Specifically, the user side video media stream may be sent to the computer used by the agent through the computer peripheral interface adaptation module 14.

The agent service processing method according to the embodiment has all technical effects of the agent service processing method shown in FIG. 3. In addition, the difference lies in that, in the agent service processing method shown in FIG. 3, types of the user side media streams from the IP network are not distinguished, that is, no matter whether the user side audio media stream or the user side video media stream is received, the received media stream is sent to the external device through the agent side media interface 12 for being played, or sent to the computer used by the agent through the computer peripheral interface adaptation module 14 for being played.

However, the agent service processing method according to this embodiment distinguishes the different types of the user side media streams. Only the user side audio media stream is sent to the agent side media interface 12 and played by the external device. The user side video media stream is sent to the computer peripheral interface adaptation module 14 and played by the computer. The two agent service processing methods shown in FIG. 3 and FIG. 4 may be chosen according to specific service requirements, thereby enriching service application scenarios and improving service flexibility.

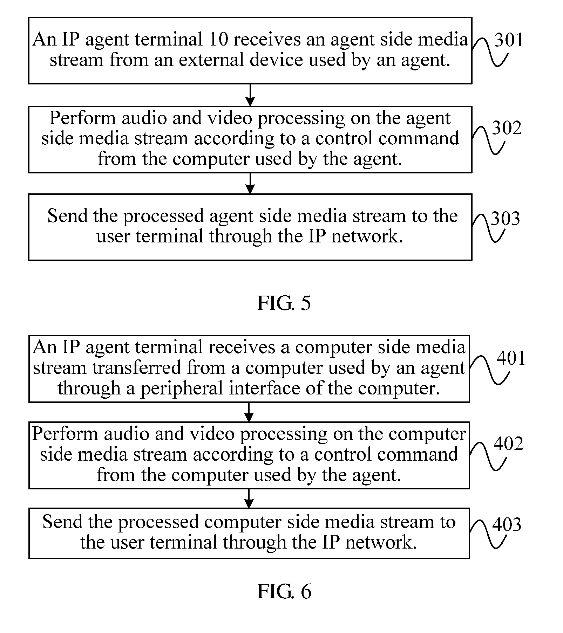

FIG. 5 shows a flow chart of an agent service processing method based on the IP agent terminal 10 according to further another embodiment of the present invention, where the method includes the following steps.

Step 301: An IP agent terminal 10 receives an agent side media stream from an external device used by an agent.

Specifically, the agent side media stream may be received through an agent side media interface 12 of the IP agent terminal 10. A computer side media stream may be received through a computer peripheral interface adaptation module 14.

The agent side media stream may be an agent side video media stream of the agent obtained through an external camera, or may be an agent side audio media stream of the agent obtained through an external earphone.

Step 302: Perform audio and video processing on the agent side media stream according to a control command from the computer used by the agent.

Specifically, the audio and video processing is performed on the agent side media stream by the audio and video media processing module 13.

Step 303: Send the processed agent side media stream to the user terminal through the IP network.

The agent service processing method of the embodiment has all technical effects of the preceding embodiments. In addition, the difference between the agent service processing method of this embodiment and the agent service processing methods shown in FIG. 3 and FIG. 4 lies in that, the media stream is received from the user side and played in the agent service processing methods shown in FIG. 3 and FIG. 4, while in the agent service processing method of this embodiment, the agent side media stream is sent to the user side and played, thereby further enriching service application scenarios and improving the service flexibility.

FIG. 6 shows a flow chart of an agent service processing method based on the IP agent terminal 10 according to further another embodiment of the present invention, where the method includes the following steps.

Step 401: An IP agent terminal receives a computer side media stream transferred from a computer used by an agent through a peripheral interface of the computer.

The computer side media stream may be generated by an audio and video media file stored in a computer hard disk. The computer side media stream specifically includes the audio and video media streams generated by exchange between the computer peripheral interface of the computer used by the agent and the agent, or the audio and video media streams stored in the computer used by the agent.

Step 402: Perform audio and video processing on the computer side media stream according to a control command from the computer used by the agent.

Specifically, the audio and video processing may be performed on the computer side media stream by an audio and video media processing module 13. Before the computer side media stream is sent to the audio and video media processing module 13, format conversion may be performed on the computer side media stream by a computer side media conversion module 1401, so that the computer side media stream may be transmitted in an IP network.

Step 403: Send the processed computer side media stream to the user terminal through the IP network.

Specifically, the computer side media stream may be sent to the IP network through the external IP interface 11, and be further sent to the user terminal.

The agent service processing method of the embodiment has all technical effects of the preceding embodiments. In addition, the difference between the agent service processing method of this embodiment and the agent service processing methods shown in FIG. 3 and FIG. 4 lies in that, the media stream is received from the user side and played in the agent service processing methods shown in FIG. 3 and FIG. 4, while in the agent service processing method of this embodiment, the computer side media stream is sent to the user side and played, thereby further enriching service application scenarios and improving the service flexibility.

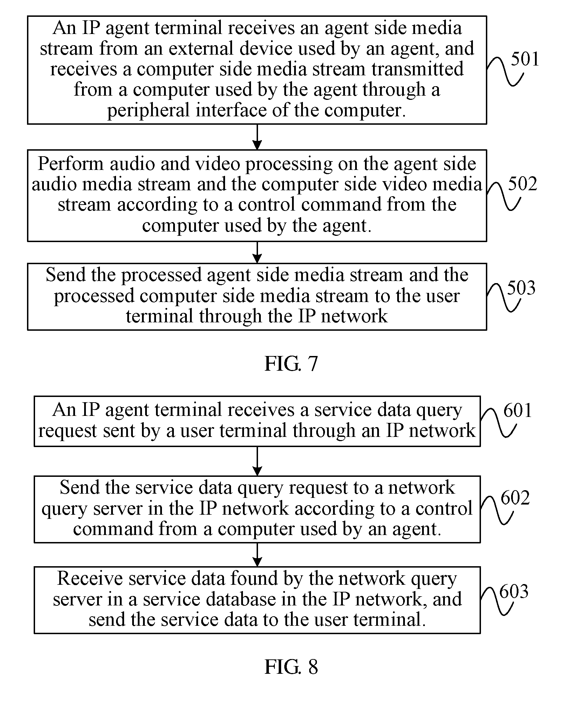

FIG. 7 shows a flow chart of an agent service processing method based on the IP agent terminal 10 according to further another embodiment of the present invention, where the method includes the following steps.

Step 501: An IP agent terminal receives an agent side media stream from an external device used by an agent, and receives a computer side media stream transmitted from a computer used by the agent through a peripheral interface of the computer.

Step 502: Perform audio and video processing on the agent side audio media stream and the computer side video media stream according to a control command from the computer used by the agent.

A specific processing process includes synchronizing and packing the agent side audio media stream and the computer side video media stream. A specific packing process may be packing, unpacking and buffering according to an RTP standard to form consecutive video data. For example, the processing may be operations such as displaying images only while not playing voices, duplicating the audio stream of the user and recording the audio stream on the computer, and displaying agent video information on a certain background picture.

Step 503: Send the processed agent side media stream and the processed computer side media stream to the user terminal through the IP network.

The agent service processing method of the embodiment has all technical effects of the preceding embodiments. In addition, the difference between the agent service processing method of this embodiment and the agent service processing methods shown in FIG. 3 and FIG. 4 lies in that, the media stream is received from the user side and played in the agent service processing methods shown in FIG. 3 and FIG. 4, while in the agent service processing method of this embodiment, both the user side media stream and the computer side media stream are sent to the user side and played, thereby further enriching service application scenarios and improving the service flexibility.

FIG. 8 shows a flow chart of an agent service processing method based on the IP agent terminal 10 according to further another embodiment of the present invention, where the method includes the following steps.

Step 601: An IP agent terminal receives a service data query request sent by a user terminal through an IP network.

Step 602: Send the service data query request to a network query server in the IP network according to a control command from a computer used by an agent.

Step 603: Receive service data found by the network query server in a service database in the IP network, and send the service data to the user terminal.

The agent service processing method of the embodiment has all technical effects of the preceding embodiments. Furthermore, exchange of service data is implemented, for example, user information is obtained after querying a database through the network, so as to provide services for the user.

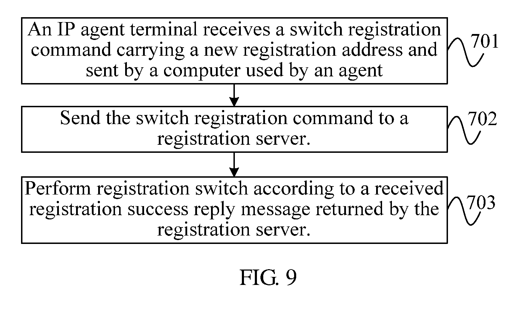

FIG. 9 shows a flow chart of an agent service processing method based on the IP agent terminal 10 according to further another embodiment of the present invention, where the method includes the following steps.

Step 701: An IP agent terminal receives a switch registration command carrying a new registration address and sent by a computer used by an agent.

Step 702: Send the switch registration command to a registration server.

Step 703: Perform registration switch according to a received registration success reply message returned by the registration server.

The agent service processing method of the embodiment has all technical effects of the preceding embodiments. Furthermore, the registration switch process is implemented in a software manner, without adding buttons to physical devices, thereby avoiding the inconvenience of re-designing and re-manufacturing.

Finally, it should be noted that the preceding embodiments are merely provided for describing the technical solutions of the present invention, but not intended to limit the present invention. It should be understood by persons of ordinary skill in the art that although the present invention has been described in detail with reference to the embodiments, modifications can be made to the technical solutions described in the embodiments, or equivalent replacements can be made to some technical features in the technical solutions, as long as such modifications or replacements do not depart from the spirit and scope of the present invention.

## Claims

1. An agent service processing method, comprising:
receiving, by an Internet Protocol (IP) agent terminal, a user side media stream sent by a user terminal through an IP network; and
performing an audio and video processing on the user side media stream according to a control command from a computer used by an agent, sending a processed user side media stream to an external device used by the agent, and/or sending the processed user side media stream to the computer used by the agent through a computer peripheral interface of the computer used by the agent.

2. The agent service processing method according to claim 1, wherein
the step of receiving, by the IP agent terminal, the user side media stream comprises: receiving a user side audio media stream and a user side video media stream; and
the step of sending the processed user side media stream to the external device used by the agent, and/or sending the processed user side media stream to the computer used by the agent comprises:
sending a processed user side audio media stream to the external device used by the agent; and
sending a processed user side video media stream to the computer used by the agent.

3. The agent service processing method according to claim 1, wherein
the step of receiving, by the IP agent terminal, the user side media stream comprises: receiving a user side audio media stream and a user side video media stream; and
the step of sending the processed user side media stream to the external device used by the agent, and/or sending the processed user side media stream to the computer used by the agent comprises:
sending a processed user side audio media stream and a processed user side video media stream to the external device used by the agent.

4. The agent service processing method according to claim 1, wherein
the step of receiving, by the IP agent terminal, the user side media stream comprises: receiving a user side audio media stream and a user side video media stream; and
the step of sending the processed user side media stream to the external device used by the agent, and/or sending the processed user side media stream to the computer used by the agent comprises:
sending the processed user side audio media stream and the processed user side video media stream to the computer used by the agent.

5. The agent service processing method according to any one of claims 1 to 4, further comprising:
receiving an agent side media stream from the external device used by the agent;
performing an audio and video processing on the agent side media stream according to a control command sent by the computer used by the agent; and
sending a processed agent side media stream to the user terminal through the IP network.

6. The agent service processing method according to any one of claims 1 to 4, further comprising:
receiving a computer side media stream transferred from the computer used by the agent through the computer peripheral interface of the computer;
performing an audio and video processing on the computer side media stream according to a control command sent by the computer used by the agent; and
sending a processed computer side media stream to the user terminal through the IP network.

7. The agent service processing method according to claim 6, wherein the computer side media stream comprises audio and video media streams generated by exchange between the computer peripheral interface of the computer used by the agent and the agent, or audio and video media streams stored in the computer used by the agent.

8. The agent service processing method according to any one of claims 1 to 4, further comprising:
receiving an agent side media stream from the external device used by the agent;
receiving a computer side media stream transferred from the computer used by the agent through the computer peripheral interface of the computer;
performing an audio and video processing on the agent side audio media stream and the computer side video media stream according to a control command sent by the computer used by the agent; and
sending a processed agent side media stream and a processed computer side media stream to the user terminal through the IP network.

9. The agent service processing method according to claim 8, wherein the step of performing the audio and video processing on the agent side audio media stream and the computer side video media stream according to the control command from the computer used by the agent comprises:
synchronizing and packing the agent side audio media stream and the computer side video media stream according to a media control command sent by the computer used by the agent.

10. The agent service processing method according to any one of claims 1 to 4, further comprising:
receiving, by the IP agent terminal, a service data query request sent by the user terminal through the IP network;
sending the service data query request to a network query server in the IP network according to a control command from the computer used by the agent; and
receiving service data found by the network query server in a service database in the IP network, and sending the service data to the user terminal.

11. The agent service processing method according to any one of claims 1 to 4, further comprising:
receiving a switch registration command carrying a new registration address sent by the computer used by the agent;
sending the switch registration command to a registration server; and
performing registration switch according to a received registration success reply message returned by the registration server.

12. An Internet Protocol (IP) agent terminal, comprising an external IP interface, an audio and video media processing module, an agent side media interface, and a computer peripheral interface adaptation module, wherein
the external IP interface is connected to an IP network and is configured to receive a user side media stream sent by a user terminal through the IP network;
the computer peripheral interface adaptation module is connected to a computer peripheral interface of a computer used by an agent in an adaptive manner and is configured to send a control command according to the received user side media stream sent by the user terminal; and send a processed user side media stream processed by the audio and video media processing module to the computer used by the agent through the computer peripheral interface of the computer used by the agent;
the audio and video media processing module is connected to the external IP interface, the agent side media interface and the computer peripheral interface adaptation module and is configured to perform an audio and video processing on the user side media stream from the external IP interface according to the control command sent by the computer peripheral interface adaptation module, and send the processed user side media stream to the agent side media interface and/or the computer peripheral interface adaptation module; and
the agent side media interface is configured to send the processed user side media stream processed by the audio and video media processing module to an external device used by the agent.

13. The IP agent terminal according to claim 12, wherein
the agent side media interface is further configured to receive an agent side media stream from the external device used by the agent;
the computer peripheral interface adaptation module is further configured to send a control command according to the agent side media stream;
the audio and video media processing module is further configured to perform an audio and video processing on the agent side media stream according to the control command and send a processed agent side media stream to the external IP interface; and
the external IP interface is further configured to send the processed agent side media stream to the user terminal through the IP network.

14. The IP agent terminal according to claim 12, wherein
the computer peripheral interface adaptation module is further configured to receive a computer side media stream from the computer used by the agent through the computer peripheral interface of the computer used by the agent, and send a control command according to the received computer side media stream;
the audio and video media processing module is further configured to perform an audio and video processing on the computer side media stream according to the control command and send a processed computer side media stream to the external IP interface; and
the external IP interface is further configured to send the processed computer side media stream to the user terminal through the IP network.

15. The IP agent terminal according to claim 12, wherein
the agent side media interface is further configured to receive an agent side media stream from the external device used by the agent;
the computer peripheral interface adaptation module is further configured to receive a computer side media stream from the computer used by the agent through the computer peripheral interface of the computer used by the agent, and send a control command according to the computer side media stream and the agent side media stream;
the audio and video media processing module is further configured to perform an audio and video processing on the agent side media stream and the computer side media stream according to the control command and send a processed agent side media stream and a processed computer side media stream to the external IP interface; and
the external IP interface is further configured to send the processed agent side media stream and the processed computer side media stream to the user terminal through the IP network.

16. The IP agent terminal according to any one of claims 11 to 15, wherein the computer peripheral interface adaptation module comprises: a computer side media conversion module, configured to perform format conversion on the computer side media stream and/or the user side media stream exchanged between the computer peripheral interface adaptation module and the audio and video media processing module.

17. The IP agent terminal according to any one of claims 11 to 15, further comprising: a signaling processing module, configured to execute a corresponding call control process according to call control signaling from the external IP interface and/or the computer peripheral interface adaptation module.

18. The IP agent terminal according to claim 17, wherein the computer peripheral interface adaptation module comprises: a computer side control command module, configured to receive information from the computer used by the agent or the external IP interface, and send the following corresponding control command after judging a type of the information by parsing the information:
when the information is a call control command from the computer, the call control command is sent to the signaling processing module, so as to perform corresponding signaling control; or
when the information is a media control command from the computer, the media control command is sent to the audio and video media processing module; or
when the information is service data from the computer or the external IP interface, the service data is forwarded between the computer peripheral interface adaptation module and the external IP interface.

19. The IP agent terminal according to any one of claims 11 to 15, wherein the agent side media interface is an earphone interface, configured to exchange audio streams with the agent through an external earphone.

20. The IP agent terminal according to any one of claims 11 to 15, wherein the agent side media interface is a Universal Serial Bus (USB) interface, configured to obtain a video stream of the agent through an external camera, or display a video stream to be played to the agent through an external display screen.

21. The IP agent terminal according to any one of claims 11 to 15, wherein the computer used by the agent is further disposed with an earphone interface, configured to exchange audio streams with the agent through an external earphone.

22. The IP agent terminal according to any one of claims 11 to 15, wherein the computer used by the agent is further disposed with a USB interface, configured to obtain a video stream of the agent through an external camera, or display a video stream to be played to the agent through an external display screen.
